# EUROPEAN PATENT APPLICATION

(11) **EP 4 422 009 A1**
(43) Date of publication of application: **28.08.2024**
(21) Application number: 24150555.1
(22) Date of filing: 05.01.2024
(51) Int. Cl.: H02H 3/20, G05F 1/56, H02H 9/00, H02H 9/02, H02M 1/32

(54) **ELECTRICALLY COUPLING OF AN ELECTRIC POWER SUPPLY DEVICE WITH AN ELECTRIC UTILITY DEVICE**

(30) Priority: 23.02.2023 EP 23465502; 24.02.2023 DE 102023201697
(71) Applicant: Continental Automotive Technologies GmbH, 30175 Hannover (DE)
(72) Inventor: Cirstinoiu, Bogdan, 300704 Timisoara (RO)
(74) Representative: Continental Corporation

(57) **Abstract**

A method of electrically coupling an electric power supply device (12) with an electric utility device (14) by an electronic circuitry arrangement (10), wherein an electric main capacity (20) is switchably connected with the electric power supply device (12) by a first electrical switch (22), wherein the electric main capacity (20) is also switchably connected with the electric utility device (14) by a second electrical switch (24), wherein the electrical switches (22, 24) are controlled to switch in a respective closed status and in a respective open status in an alternate manner, wherein a first electrical voltage is sensed at a first electric connection (16) of the electronic circuitry arrangement, the sensed first electrical voltage is compared with a predefined over voltage condition, and at least one of the first and second electrical switches is operated as a voltage protector dependent on the comparison.

## Description

The invention relates to an electronic circuitry arrangement for electrically coupling an electric power supply device with an electric utility device in order to provide a power supply function for the electric utility device, wherein the electronic circuitry arrangement has a first electric connection configured to couple electrically the electric power supply device and a second electric connection configured to couple electrically the electric utility device, wherein the electronic circuitry arrangement comprises an electric main capacity, a first electrical switch, a second electrical switch, and a control apparatus, wherein the first electrical switch is connected with the first electric connection and the electric main capacity, in order to provide a switchable electrical connection between the first electric connection and the electric main capacity, wherein the second electrical switch is connected with the second electric connection and the electric main capacity, in order to provide a switchable electrical connection between the second electric connection and the electric main capacity, wherein the control apparatus is configured to control the first and the second electrical switches in order to switch alternately the first and the second switches in a closed status and an open status. The invention relates further to a vehicle having a vehicle battery forming an electric power supply device (and an electric utility device, especially at least an electric machine for propelling the vehicle, wherein the vehicle battery and the electric utility device are electrically coupled by an electronic circuitry arrangement. Finally, the invention relates to a method of electrically coupling an electric power supply device with an electric utility device by an electronic circuitry arrangement in order to provide a power supply function for the electric utility device, wherein an electric main capacity is switchably connected with the electric power supply device by a first electrical switch, and wherein the electric main capacity is also switchably connected with the electric utility device by a second electrical switch, wherein the first and the second electrical switches are controlled to switch in a respective closed status and in a respective open status in an alternate manner.

Generic electronic circuitry arrangements, vehicles comprising respective electronic circuitry arrangements as well as generic methods are known in the art. Often, they address the technical problem that establishing an electrical connection between electric devices may cause an inrush current which may affect at least one of the devices between which the electrical connection is established. In order to address the inrush current problem, several different approaches are used in the art. One such approach to address the before-mentioned problem is that a specific line resistance is provided which the inrush current passes through. As far as the value of the inrush current is smaller than a predefined value, the line resistance is shortened by an electrical switch activated by a respective control apparatus. The current is measured by a respective current sensor, wherein the control apparatus compares the respective current sensor signal with the predefined value. Although this approach is well-known in the art, specific disadvantages may appear, for instance, a power dissipation or power loss, respectively, by the use of the line resistance and/or the like. Moreover, the line resistance is usually a large component which needs to be handled by a respective construction of the electronic circuitry arrangement.

Moreover, another approach for addressing the before-mentioned problem is to use electrical switches in combination with an electric storage element such as an electric inductivity, an electric capacity, or combinations thereof.

One possibility is to replace the line resistance by the electrical switches, as mentioned before, can be achieved by an electric inductivity and an electrical switch being in series in connection. The electrical switch is operated at high frequency so that a specific current through the inductivity can be adjusted by a specific chosen duty cycle. However, such design may also have some disadvantages, for instance, a limited reaction velocity with regard to adjustments and the like.

Yet another approach of the art is disclosed by US 2019/0190295 A1. This citation discloses a charge management system using an electric main capacity as well as a first and a second electrical switch which are controlled by a control apparatus. The electric main capacity is switchably connected with the electric power supply device by the first electrical switch. The electric main capacity is also switchably connected with the electric utility device by the second electrical switch. The first and second electrical switches are controlled by the control apparatus so that the switches switch in a respective closed status and in a respective closed status in an alternate manner. In this regard, electric charge can be supplied from the electric power supply device to the electric main capacity, on the one hand, and, on the other hand, the electric charge can be supplied from the electric main capacity to the electric utility device by the second electrical switch. Since, the first electrical switch is in the open status when the second electrical switch is in the closed status and vice versa, a direct electric connection between the electric power supply device and the electric utility device is avoided. The duty cycle of the electrical switches and the capacity of the electric main capacity allows to transfer a predefined amount of electric charge from the electric power supply device to the electric utility device by the electronic circuitry arrangement. So, this electronic circuitry arrangement also allows handling the inrush current problem.

However, the known approaches dealing with the inrush current problem fail to consider that conditions may appear leading to an overvoltage problem, especially at the electric utility device. Especially, if the electric utility device comprises electronic components, overvoltage may cause a serious problem. Also, standards dealing with electric security, such as, for instance, IEC 335 or the like, require construction of respective electric insulation of the electric utility device which may cause not only costs but also may cause cumbersome design requirements. Especially with regard to vehicles, a load dump test, especially with regard to electrically propelled vehicles, is required. In this regard, it may be tested that an electric reference potential may be disconnected at a battery of the vehicle. Such requirements are, for instance, detailed according to ISO 7637/2 and/or the like.

Therefore, it is the object of the invention, to improve a generic electronic circuitry arrangement such that requirements with regard to electric security of the devices, especially electric utility devices, can be reduced.

In this regard, the invention proposes an electronic circuitry arrangement, a vehicle as well as a method according to the independent claims.

Preferable embodiments can be derived from the features of the dependent claims.

With regard to a generic electronic circuitry arrangement, it is especially proposed that the electronic circuitry arrangement has a first voltage sensor which is configured to sense a first electrical voltage at the first electric connection of the electronic circuitry arrangement, wherein the control apparatus is configured to compare the sensed first electrical voltage with a predefined over voltage condition, and to operate at least one of the first and second electrical switches as a voltage protector dependent on the comparison.

With regard to a generic vehicle, it is especially proposed that the electronic circuitry arrangement is configured according to the invention.

With regard to a generic method, it is especially proposed that a first electrical voltage is sensed at a first electric connection of the electronic circuitry arrangement being configured to couple electrically the electric power supply device, the sensed first electrical voltage is compared with a predefined over voltage condition, and at least one of the first and second electrical switches is operated as a voltage protector dependent on the comparison.

The invention is especially directed to direct current applications. It is one consideration of the invention to improve the generic electronic circuitry arrangement such that it can be additionally be used to provide an overvoltage protection. In this regard, the invention is based on an electronic circuitry arrangement having a main electric capacity as well as two electrical switches.

The electronic circuitry arrangement according to the invention preferably has a first electric connection configured to couple electrically the electric power supply device. Moreover, the electronic circuitry arrangement of the invention preferably has a second electric connection configured to couple electrically the electric utility device. The second electric connection can be provided by electric plugs or the like or may be established by a non-losable electric connection. Preferably, a plug-and-socket-connection may be provided. However, this is only mandatory.

The first electrical switch is connected with the first electric connection and the electric main capacity. In this regard, a switchable electrical connection between the first electric connection and the electric main capacity can be established. Also, the second electrical switch is connected with the second electric connection and the electric main capacity. In this regard, a switchable electrical connection between the second electric connection and the electric main capacity can be established. By the control apparatus, it is possible to control the first and the second electrical switches such that the first and the second electrical switches may have alternately the closed status and the open status. Therefore, a direct electrical connection between the electric power supply device and the electric utility device can be avoided. At the same time, by adjusting the duty cycle of the first and the second electrical switches, the inrush current can be controlled in a predefined way. In this regard, each of the first and the second electrical switches may have a respective first and second control port for controlling the respective switching statuses. The control ports are electrically connected with the control apparatus so that the switching statuses of the first and second electrical switches can be controlled by the control apparatus.

For this purpose, the control apparatus provides respective first and second control signals acting on the respective control ports. Especially, the first electrical switch is configured to establish an electric connection between the first electric connection and the electric main capacity in the closed status or a switched-on status, respectively, wherein the first electrical switch is configured to disconnect the first electric connection from the electric main capacity in the open status or switched-off status, respectively. Similar, the second electrical switch is configured to establish an electric connection between the second electric connection and the electric main capacity in a closed status, wherein the second electrical switch is configured to disconnect the second electric connection from the electric main capacity in the open status. The control apparatus controls the first and second electrical switches at least for a predefined period of time such that only a predefined electric energy can be transferred from the first electric connection to the second electric connection.

A further consideration of the invention deals with the idea that the first and/or the second electrical switch can be used for overvoltage protection also. In this regard, no additional component for blocking overvoltage needs to be necessary. The invention uses the components for protecting against overvoltage which are already present for handling inrush current. This can be achieved by sensing the first electrical voltage at the first electric connection of the electronic circuitry arrangement, comparing the sensed first electrical voltage with a predefined overvoltage condition, which, for example, may be a specific voltage value that is supposed to be not exceeded, and operating at least one of the first and second electrical switches as a voltage protector dependent on the comparison. As far as the sensed first electrical voltage is higher than the predefined overvoltage condition, at least one of the both electrical switches is respectively operated as the voltage protector. In this regard, it is possible to switch the respective one of the electrical switches in the open status or switched-off status, respectively. This allows decoupling the electric utility device from the overvoltage appearing at the first electric connection.

The electric power supply device may include at least one or more of the group consisting of a battery, especially a secondary battery, a power supply network, especially a public power supply network, a power plant, a fuel cell, a photovoltaic cell and/or the like. The electric utility device may be any device consuming at least partially electric energy such as an electric machine, a computational device, a communication device, a control device, an electric heater, an air conditioner, and/or the like. Especially, the electric utility device may be an electric network of a vehicle, especially an electric propelled vehicle.

The electronic circuitry arrangement may be at least partially a hardware circuit. The electronic circuitry arrangement, especially the control apparatus, may also at least partially be formed by a programmable computer or the like. Also, combinations thereof may be possible.

The electric main capacity preferably comprises at least one electric capacitor. However, plural electric capacitors can be provided which may be connected at least partially in parallel and/or in series. The first and second electrical switches may be provided by electromechanical switches. However, preferably, they are provided by electrionc switches, such as a transistor, especially a field effect transistor, a bipolar transistor, a thyristor circuitry, a gate-turn-off-thyristor, combination circuitries thereof and/or the like.

The control apparatus may comprise a hardware circuitry itself and/or a programmable computer. The control apparatus can be provided as one component which is provided by a solid-state-chip. The control apparatus is electrically connected with respective control ports of the electrical switches as mentioned above. In this regard, the control apparatus can provide respective first and second control signals to the respective electrical switches in order to provide the determined operation of the electronic circuitry arrangement.

The electronic circuitry arrangement further comprises the first voltage sensor which is configured to sense the first electrical voltage at the first electric connection of the electronic circuitry arrangement. This voltage substantially conforms to the electric voltage provided by the electric power supply device. However, especially when disconnected, the first voltage sensor may sense also an overvoltage condition. The first voltage sensor is in communication with the control apparatus and provides a respective first voltage signal to the control apparatus dependent on the voltage sensed by the first voltage sensor.

The control apparatus is configured to compare the communicated value of the first electrical voltage sensed with the predefined overvoltage condition. The predefined overvoltage condition represents a value for the first electrical voltage which represents a maximum allowable voltage for the determined operation. If the sensed first electrical voltage is smaller than the predefined overvoltage condition, the first and second electrical switches are alternatively switched in the open and closed statuses, respectively, in order to allow a predefined electrical charge passing the electronic circuitry arrangement. If comparing determines that the sensed first electrical voltage is higher than the predefined overvoltage condition, the control apparatus stops its operation and changes operation to a protection modus. In the protection modus, the control apparatus provides a respective first and second control signal in order to operate at least one of the first and second switches as a voltage protector dependent on the comparison. In this regard, for example, one or both of the electrical switches can be switched in the open status so that an electrical disconnection can be achieved. Preferably, sensing the first electrical voltage and comparing can be proceeded, and, if the overvoltage condition is not further be met, the determined charge transfer operation can be resumed.

According to an exemplary embodiment, the first and second electrical switches comprise a transistor and the control apparatus is configured to operate the transistors in a respective switch mode. The switch mode of a transistor means that the electric connection between two ports of the transistor establishing the switchable connection can have two statuses, namely a status corresponding to a closed status or switched-on status, which provides a very small electrical resistance between the two ports so that a high current at a very small residual voltage is possible. Contrary, in the open status or switched-off-status, the electrical connection between these ports of the transistor provides a very high electric resistance so that a very small residual current is provided, even if the voltage acting on these ports is very high. Different herefrom is a continuous mode of the transistor, which allow a continuous value of a resistance between the before-mentioned ports being adjusted. The electrical resistance between the before-mentioned ports is controlled by a respective control signal acting on the respective control port of the transistor.

In this regard, the transistor provides a characteristic similar to an electromechanical switch. The control signal of the transistor is consequently also a signal, especially an electric signal, that has two respective values corresponding to the two statuses to be adjusted.

According to another exemplary embodiment, the control apparatus is configured to operate at least one of the transistors in a continuous mode if the sensed first electrical voltage is higher than the predefined over voltage condition. In this regard, preferably, the closed status of the electrical switch is replaced by a continuous mode, which allows providing a higher resistance between the relevant ports of the transistor than is provided in the closed status. This allows continuing the energy transfer operation of the electronic circuitry arrangement although an overvoltage condition has been detected. However, protection of the electric utility device can be achieved.

The transistor generally can be a bipolar transistor, especially an insulated-gate-bipolar transistor (IGBT), a field effect transistor, especially a metal oxide semiconductor field effect transistor (MOSFET), or the like. The control port of the transistor can be a base contact in case of a conventional bipolar transistor, or a gate contact in case of a field effect transistor or an IGBT.

According to another exemplary embodiment, the transistor has an amplifying port, wherein the amplifying port of the first electrical switch is electrically connected with the first electric connection. Especially with regard to the overvoltage protection, the amplifying port allows a good and sufficient overvoltage protection. The amplifying port of a bipolar transistor is usually a collector contact, wherein the amplifying port of a field effect transistor is usually a drain contact. So, the amplifying port allows for a good protection against high voltages acting on the first electric connection.

Moreover, according to another exemplary embodiment, the transistor has an amplifying port, wherein the amplifying port of the second electrical switch is electrically connected with the electric main capacity. In this regard, also the second electrical switch allows a protection function against overvoltage similar to the first electrical switch. Moreover, both functions can be combined so that the overvoltage protection can be achieved by using both of the first and second electrical switch.

According to another exemplary embodiment, the transistor has an amplifying port, wherein the amplifying port of the second electrical switch is electrically connected with the second electric connection. This design improves the electronic circuitry arrangement such that both electrical switches, namely the first and the second electrical switches, can be controlled with first and second control signals which may have the same electric reference potential. This simplifies operation and construction of the electronic circuitry arrangement.

According to yet another exemplary embodiment, the electronic circuitry arrangement comprises a second voltage sensor sensing a second electrical voltage at the electric main capacity. Preferably, the second voltage sensor is in communication with the control apparatus. The control apparatus may provide a second comparison, wherein the sensed second electrical voltage may be compared with a reference value. The second electrical switch and/or the first electrical switch may be controlled dependent on the second comparison. In this regard, it is possible to monitor additionally an energy status of the electric main capacity with regard to the overvoltage condition. In this regard, the protection characteristic of the electronic circuitry arrangement can be enhanced.

Moreover, according to another exemplary embodiment, at least the electric main capacity, the first electrical switch, the second electrical switch, and the control apparatus are integrally arranged on one single solid-state chip. This allows providing a very easy construction of the electronic circuitry arrangement so that the electronic circuitry arrangement can be retrofitted easily in existing energy supply circuitries.

According to yet another exemplary embodiment, the electronic circuitry arrangement has a housing, wherein preferably at least one of the first and the second electric connection are provided by the housing. The housing can have a respective socket or plug or the like in order to provide the respective electric connection. Also, the housing can provide respective electric contacts in order to establish the respective electric connection. Also, combinations thereof can be provided.

According to another exemplary embodiment, only the first electrical switch or the second electrical switch is operated as a voltage protector dependent on the comparison. So, only one of the both electrical switches needs to be respectively operated. However, the electrical switches can also be operated together in order to achieve the voltage protection. The control apparatus provides respective control signals. Preferably, the first electrical switch is used as the voltage protector. In this regard, the first electrical switch also may protect the electronic circuitry arrangement from overvoltage.

According to yet another exemplary embodiment, at least one of the first and second electrical switches comprises a transistor, wherein the transistor is operated in a continuous mode if the sensed first electrical voltage is higher than the predefined over voltage condition. In this regard, it can be achieved that the electronic circuitry arrangement still allows charge transfer during an overvoltage condition. The control apparatus may provide a respective control signal for the transistor.

According to another exemplary embodiment, the transistor is operated in a combined operation mode. The combined operation mode may include that the switched-off-status or the open status, respectively, is maintained, wherein the switched-on-status or the closed status is replaced by the continuous mode. The continuous mode is only present during the closed mode, as previously mentioned. In this regard, charge transfer as well as overvoltage protection can be achieved at the same time. This further allows controlling of inrush current during overvoltage condition.

According to yet another exemplary embodiment, the first and the second electrical switches are controlled to switch such that the inrush current at the first electric connection is limited to a predefined current value at least if the sensed first electrical voltage is smaller than the predefined over voltage condition. In this regard, a controlled charge transfer from the first electric connection to the second electric connection can be achieved. Preferably, the characteristic of charge transfer is adjustable. The control apparatus may have characteristic charge transfer profiles. However, further condition data of the electric utility device can be provided in order to adapt or to
determine a respective characteristic of the inrush current. Depending thereon, the first and second electrical switches can be controlled.

The teaching of the present invention can be readily understood, and at least some additional specific details will appear by considering the following detailed description of some exemplary embodiments in conjunction with the accompanying drawings. In the drawings, same reference characters correspond to the same components and functions.

The invention also comprises the combinations of the features of the different embodiments.

In the following exemplary implementations of the invention are described. The figures show:
- Fig. 1: electronic circuitry arrangement for electrically coupling an electric power supply device with an electric utility device of a not-shown vehicle;
- Fig. 2: a simplified circuit diagram of the electric circuitry according to fig. 1;
- Fig. 3: a more detailed embodiment of the circuit diagram according to fig. 2;
- Fig. 4: a control circuit for controlling a first and a second electrical switch 22, 24 of the circuit diagram according to figs. 2 or 3, respectively;
- Fig. 5: an electronic circuit diagram of a comparing circuitry for the circuit diagram according to figs. 3; and
- Fig. 6: a further electronic circuit diagram of a portion of the electronic circuitry arrangement 10 for providing a permanent-on-function.

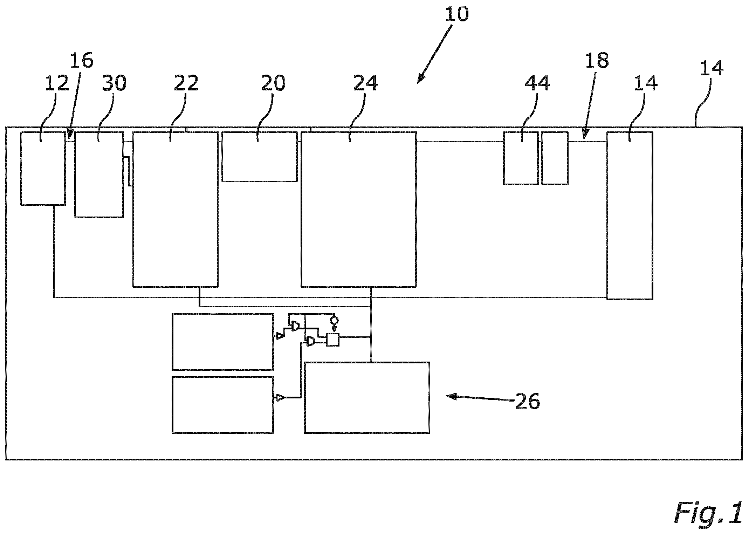

Fig. 1 shows an electronic block diagram of an electronic circuitry arrangement 10 for electrically coupling an electric power supply device 12 which is presently in this embodiment formed by a battery of a non-shown electrically propelled vehicle and an electric utility device 14 of the vehicle which is in the present embodiment at least partially formed by an electronic control device of the electrically propelled vehicle. The electronic circuitry arrangement 10 provides for a power supply function for the electric utility device 14.

The electronic circuitry arrangement 10 comprises an electric main capacity 20, a first electrical switch 22, a second electrical switch 24, and a control apparatus 26. The electronic circuitry arrangement 10 has a first electric connection 16 configured to couple electrically the electric power supply device 12 and a second electric connection 18 configured to couple electrically the electric utility device 14. The first electrical switch 22 is connected with the first electric connection 16 and the electric main capacity 20, in order to provide a switchable electric connection between the first electric connection 16 and the electric main capacity 20. The second electrical switch 24 is connected with the second electric connection 18 and the electric main capacity 20, in order to provide a switchable electric connection between the second electric connection 18 and the electric main capacity 20. The control apparatus 26 is configured to control the first and the second electrical switches 22, 24 in order to switch alternately the first and the second electrical switches 22, 24 in a closed status and in an open status, respectively, at least during a predefined time range. This allows an inrush current being reduced.

The electronic circuitry arrangement 10 is configured to reduce the inrush current from the electric power supply device 12 to the electric utility device 14. For this purpose, the control apparatus 26 controls the first and the second electrical switches 22, 24, respectively, in an alternate manner between the closed status and the open status. During the closed status, the respective electrical switch 22, 24 provides an electric connection between its respective ports, wherein in the open status, the respective electrical switch 22, 24 provides an electric disconnection between its respective ports.

Consequently, if a first electric voltage at the first electric connection 16 differs from an electric voltage at the second electric connection 18, especially if the first electric voltage at the first electric connection 16 is higher than the electric voltage at the second electric connection 18, the switched operation of the first and the second electrical switches 16, 18 avoids a direct electric connection between the first electric connection 16 and the second electric connection 18 so that the inrush current can be sufficiently controlled. For this purpose, duty ratios between the respective closed statuses and the respective open statuses of the first and the second electrical switches 22, 24 are respectively adjusted by the control apparatus 26.

Among others, the duty cycle depends on an electric capacity of the electric main capacity 20. However, the duty cycle may also depend on further conditions such as, for instance, discussed below. If the voltage difference between the first electric connection 16 and the second electric connection 18 is smaller than a predefined value, both of the electrical switches 22, 24 will be switched in the closed status together. In this regard, a conductive electric connection is provided between the first electric connection 16 and the second electric connection 18. Therefore, the electronic circuitry arrangement 10 provides for a power supply function of the electric utility device 14 by the electric power supply device 12.

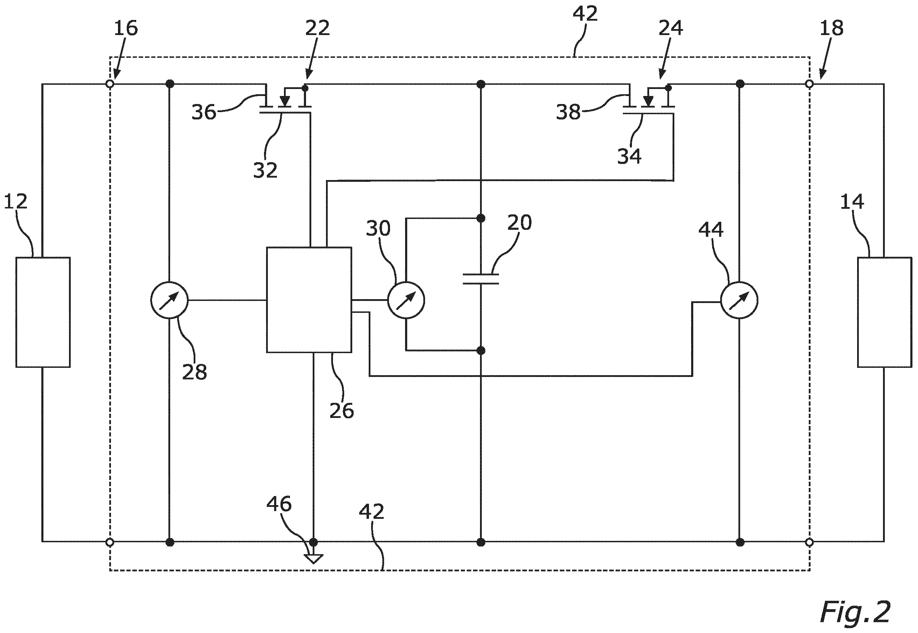

As can be seen from fig. 2 which shows an electric circuit diagram of a first possible embodiment based on fig. 1, there are provided three voltage sensors 28, 30, 44. The first voltage sensor 28 senses the first electric voltage at the first electric connection 16. The second voltage sensor 30 senses the electric voltage at the electric main capacity 20. The third voltage sensor 44 senses the electric voltage at the second electric connection 18. The voltage sensors 28, 30, 44 are communicatively connected with the control apparatus 26 so that the respective sensed voltage values are available in the control apparatus 26. Moreover, the first and the second electrical switches 22, 24 have a respective control port which is also connected with the control apparatus 26. The control apparatus 26 outputs respective control signals in order to switch the respective electrical switches 22, 24 in the desired switched status, namely, the open status and the closed status.

Moreover, one of the electric potentials of the first and the second electric connections 16, 18 form a common electric reference potential 46.

In order to provide additional electric protection against overvoltage, the control apparatus 26 is configured to compare the sensed first electrical voltage at the first electric connection 16 with a predefined overvoltage condition, and to operate at least one of the first and the second electrical switches 22, 24 as a voltage protector dependent on the comparison. In the present embodiment, the control apparatus 26 switches the first electrical switch 22 in the open status. This allows decoupling the first electric connection 16 from the electric main capacity 20 and the second electric connection 18 so as to provide proper protection against overvoltage. The overvoltage condition may be provided as a predefined value for a maximum first reference voltage, which is compared with the sensed first electrical voltage of the first voltage sensor 28 by the control apparatus 26.

Independent from the status of the operation of power supply, the second electrical switch 22 is switched in the open status if the sensed first electrical voltage complies with the overvoltage condition. Namely, independent from the operational status of the electronic circuitry arrangement 10 to provide an electric connection between the first electric connection 16 and the second electric connection 18 or to control the inrush current.

As can be seen from fig. 2, the first and the second electrical switches 22, 24 comprise a respective transistor 32, 34. The control apparatus 26 is configured to operate the transistors 32, 34 in a respective switch mode. In the present embodiment, the control apparatus 26 is configured to operate the transistor 32 to be switched off or to be switched in the open status, respectively, for providing overvoltage protection. However, in an alternate embodiment, it is also possible that the control apparatus 26 is configured to operate the transistor 32 in a continuous mode if the sensed first electrical voltage is higher than the predefined overvoltage condition. In the present embodiment, the transistors 32, 34 each have an amplifying port 36, 38, wherein the amplifying port 36 of the first electrical switch 22 or the transistor 32, respectively, is electrically connected with the first electric connection 16. Generally, the transistors 32, 34 may be formed by a conventional bipolar transistor, such as a NPN-transistor, or a PNP-transistor. Also, the transistors 32, 34 may be provided by a field effect transistor, especially a MOSFET, especially n-channel-MOSFET or a p-channel-MOSFET. In the present embodiment according to fig. 2, the transistors 32, 34 are provided by respective n-channel-MOSFETs. The respective amplifying ports 36, 38 are provided by drain-ports of the MOSFETs 32, 34. The amplifying ports 36, 38 are formed by collector-ports of conventional bipolar transistors if used instead. In this regard, the transistors 32, 34 can also be formed by NPN-transistors. However, for those skilled in the art, it is clear that the structure of the circuit diagram according to fig. 2 can be adapted to use p-channel-MOSFETs or PNP-transistors, respectively.

Although not shown in the figures, the electronic circuitry arrangement 10 is provided by a single solid-state-chip 42 as indicated in fig. 2. However, if necessary, some components, such as, for example, the electric main capacity 20 can be provided by an external electric capacitor in order to achieve the small size of the chip 42. Moreover, the electronic circuitry arrangement 10, especially its components, are arranged in a housing 40 as indicated in fig. 1. The housing 40 is preferably formed so that it provides the first and the second electric connection 16, 18. So, it is possible to achieve a single component to be handled. Especially, it is possible to retrofit the inventive concept in existing designs.

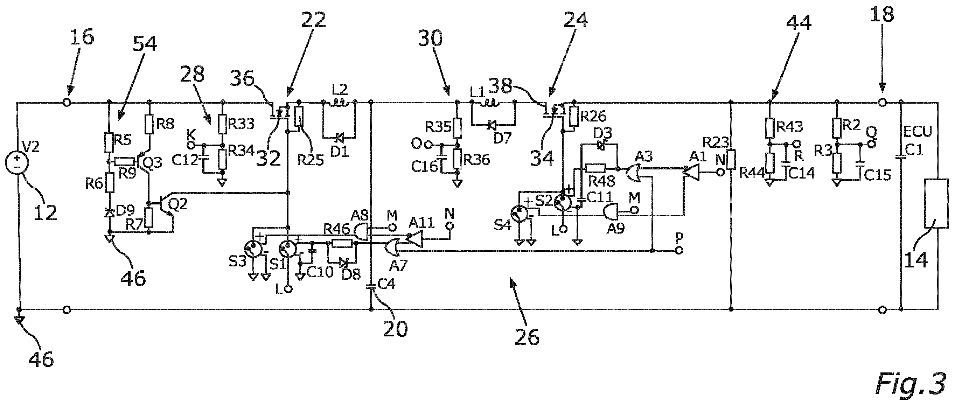

Figs. 3 through 6 show a more detailed circuit diagram of the electronic circuitry arrangement 10 according to fig. 2. Especially, the control unit 4 is shown in more detail.

As can be seen from fig. 3, the electric main capacity 20 is not directly coupled with the transistors 32, 34, but it is coupled via respective electric inductivities L1, L2. This enhances the conditions during switching of the transistors 32, 34. Moreover, respective diodes D1, D7 are provided in order to further support the switching process.

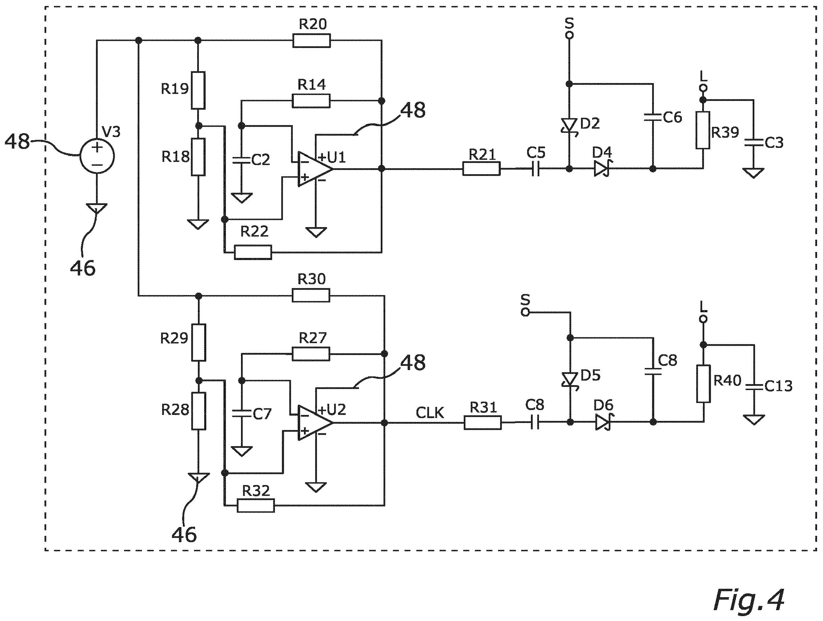

The control apparatus 26 is partially shown in fig. 3, and some more of its components are shown in the figs. 4 through 6. Some portions of the control apparatus 26 as shown in fig. 3 support driving of the transistors 32, 34. A general operation of controlling the inrush current can be derived from the detail of the control apparatus 26 as shown in fig. 4. For each of the transistors 32, 34, a respective portion of switching operations of the control apparatus 26 is provided by use of respective amplifiers U1, U2. The operation of these circuitries is well-known to those skilled in the art so that further explanation does not appear to be necessary.

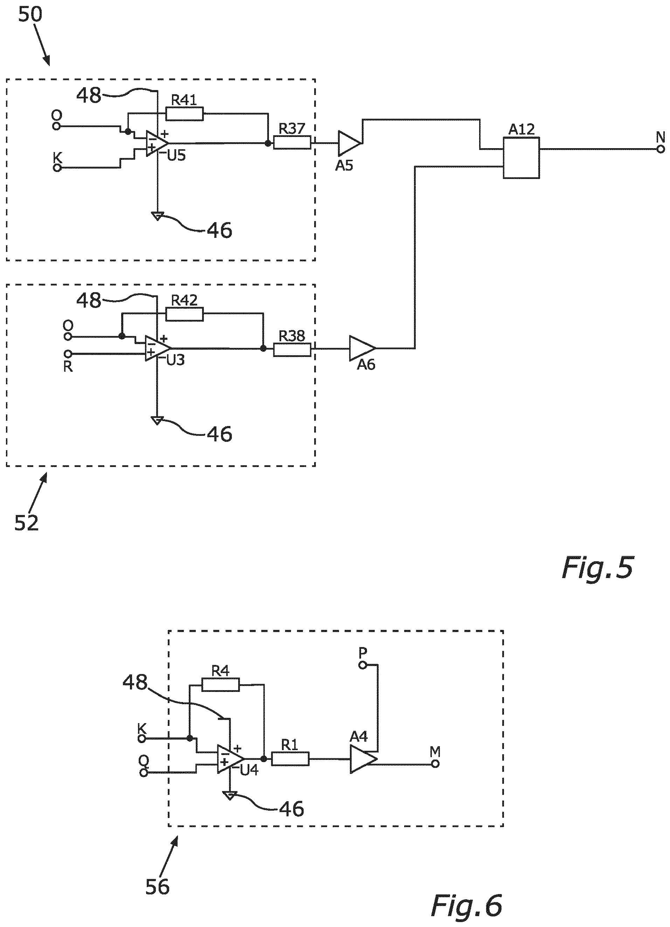

Fig. 5 shows to comparators 50, 52 as explained below. The comparator 50 compared the first electrical voltage sensed by the first voltage sensor 28 with a voltage of the electric main capacity 20 as sensed with the second voltage sensor 30. If the voltage at the electric main capacity 20 is larger than the first electrical voltage, this comparator 50 provides an on-signal.

The second comparator 52 compares the voltage of the second voltage sensor 30 with the electrical voltage as sensed with the third electrical voltage sensor 44. If the electrical voltage at the electric main capacity 20 is smaller than the voltage at the second electric connection 18, an on-signal is provided.

The signal of the first comparator 50 is supplied to a set-port of an RS-flip-flop A12. The output signal of the second comparator 52 is coupled with a reset-port of the RS-flip-flop A12. A Q-output of the RS-flip-flop A12 is supplied to the driver circuitry of the control apparatus 26 as shown in fig. 3.

Moreover, fig. 6 shows yet another comparator 56, which compares the first electrical voltage as sensed with the first voltage sensor 28 a further voltage as provided by the third voltage sensor 44. This comparator 56 provides a control signal for the control apparatus 26 in order to achieve a permanent-on signal after charging is done.

Additionally, a protection circuit 54 is provided which is configured to connect the control-port of the transistor 32 with the electric reference potential 46, if the first electrical voltage at the first electric connection 16 exceeds the predefined overvoltage condition. The predefined overvoltage condition is provided in this circuitry by the arrangement of the components of the protection circuit 54. Especially, the resistors R5, R6 as well as a diode D9 define the predefined overvoltage condition.

As can be seen from the before-mentioned embodiment, the present embodiments are formed by hardware only. This allows a very fast reaction if overvoltage, especially spikes or the like, appear. However, generally, it is also possible that the control apparatus 26 may be at least partially provided by a programmable computer.

Usually, a battery filter as used to supply an electric utility device 14 by an electric power supply device 12 may have a capacitor with a high electric capacity, such as, for instance, 1000 pF. This circuit design may cause inrush current in response to an electric connection is provided so that overvoltage may appear and affect the electric utility device 14 which may comprise electrical components. In the state of the art, a slow charge resistor may be provided in order to address the inrush current problem. The invention addresses the problem that overvoltage may appear, for example, in a vehicle, at a slow transfer of energy from a clamp KL30 or KL15 to an auxiliary small capacitor. After such a capacitor is charged, a separate path will discharge the capacitor to the before-mentioned large capacitor. However, this design is improved by the invention to provide additionally an overvoltage protection at the same time.

The circuit works as follows: The first transistor (see M3 transistor) is in the on-status, so it will charge through the inductor the capacitor C4 forming the electric main capacity 20. This is a small capacitor that can keep a small charge. As such charging it is fast, the inrush current to it is limited. After the voltage on the capacitor reaches a certain voltage, namely the overvoltage condition, a comparator of the control apparatus 26 as detailed above, sees this voltage and triggers M4 to the open status. Once M3 is in the open status, transistor M4 is switched in the on status and transfers the energy stored in C4 to the capacitive band on the other side of the circuit that is the electric utility device 14. This capacitor bank is the main reason, we need a slow charge circuit.

Once the voltage across C4 reaches a lower threshold, namely the overvoltage condition, M4 is set to open status and as such decouples the line that is the first electric connection 16. Then the transistor M3 is ON again and charges the C4 capacitor again. This process is repeated until the voltage across the capacitor bank is high enough so that switching both M3 and M4 transistors 32, 34 in the on status does not generate a high inrush current.

Because the circuit uses only three comparators, the implementation does not need software implementation and is automatic. The rest of the circuit is there in order to make the design fully functional.

The main advantage is that,for most ECU designs, there is already an over voltage protection implementation that includes some of these components. This implementation can be updated if needed in order to include such a slow charging circuit with minimal addition of components.

Generally, the invention allows controlling, especially limiting the inrush current, and at the same time without additional power components allows providing an overvoltage protection.

The detailed embodiments before are provided only for explaining the invention not for limiting its scope.

Although various aspects of the invention are set out in the independent claims, other aspects of the invention comprise other combinations of features from the described embodiments and/or the dependent claims with the features of the independent claims, and not solely the combinations explicitly set out in the claims.

This is also covered during that, while the above describes exemplary embodiments of the invention, this description should not be regarded as limiting the scope. Rather, there are several variations and modifications that may be made without departing from the scope of the present invention as defined in the claims.

### Reference Characters

- 10: electronic circuitry arrangement
- 12: electric power supply device
- 14: electric utility device
- 16: first electric connection
- 18: second electric connection
- 20: electric main capacity
- 22: first electrical switch
- 24: second electrical switch
- 26: control apparatus
- 28: first voltage sensor
- 30: second voltage sensor
- 32: transistor
- 34: transistor
- 36: amplifying port
- 38: amplifying port
- 40: housing
- 42: solid-state chip
- 44: third voltage sensor
- 46: electric reference potential
- 48: control supply
- 50: comparator
- 52: comparator
- 54: protection circuit
- 56: comparator

## Claims

1. An electronic circuitry arrangement (10) for electrically coupling an electric power supply device (12) with an electric utility device (14) in order to provide a power supply function for the electric utility device (14), wherein the electronic circuitry arrangement (10) has a first electric connection (16) configured to couple electrically the electric power supply device (12) and a second electric connection (18) configured to couple electrically the electric utility device (14), wherein the electronic circuitry arrangement (10) comprises an electric main capacity (20), a first electrical switch (22), a second electrical switch (24), and a control apparatus (26), wherein the first electrical switch (22) is connected with the first electric connection (16) and the electric main capacity (20), in order to provide a switchable electrical connection between the first electric connection (16) and the electric main capacity (20), wherein the second electrical switch (24) is connected with the second electric connection (18) and the electric main capacity (20), in order to provide a switchable electrical connection between the second electric connection (18) and the electric main capacity (20), wherein the control apparatus (26) is configured to control the first and the second electrical switches (22, 24) in order to switch alternately the first and the second switches (22, 24) in a closed status and an open status,
**characterized by**
a first voltage sensor (30) which is configured to sense a first electrical voltage at the first electric connection (16) of the electronic circuitry arrangement (10), wherein the control apparatus (26) is configured to compare the sensed first electrical voltage with a predefined over voltage condition, and to operate at least one of the first and second electrical switches (22, 24) as a voltage protector dependent on the comparison.

2. The electronic circuitry arrangement according to claim 1, wherein the first and the second electrical switches (22, 24) comprise a transistor (32, 34) and the control apparatus (26) is configured to operate the transistors (32, 34) in a respective switch mode.

3. The electronic circuitry arrangement according to claim 2, wherein the control apparatus (26) is configured to operate at least one of the transistors (32, 34) in a continuous mode if the sensed first electrical voltage is higher than the predefined over voltage condition.

4. The electronic circuitry arrangement according to claim 2 or 3, wherein the transistor (32, 34) has an amplifying port (36, 38), wherein the amplifying port (36) of the first electrical switch (22) is electrically connected with the first electric connection (16).

5. The electronic circuitry arrangement according to at least one of the claims 2 through 4, wherein the transistor (32, 34) has an amplifying port (36, 38), wherein the amplifying port (38) of the second electrical switch (24) is electrically connected with the electric main capacity (20).

6. The electronic circuitry arrangement according to one of the preceding claims 2 through 4, wherein the transistor (32, 34) has an amplifying port (36, 38), wherein the amplifying port (38) of the second electrical switch (24) is electrically connected with the second electric connection (18).

7. The electronic circuitry arrangement according to one of the preceding claims, comprising a second voltage sensor (30) sensing a second electrical voltage at the electric main capacity (20).

8. The electronic circuitry arrangement according to one of the preceding claims, wherein at least the electric main capacity (20), the first electrical switch (22), the second electrical switch (24), and the control apparatus (26) are integrally arranged on one single solid-state chip (42).

9. The electronic circuitry arrangement according to one of the preceding claims, comprising a housing (40), wherein preferably at least one of the first and the second electric connection (16, 18) are provided by the housing (40).

10. A vehicle having a vehicle battery forming an electric power supply device (12) and an electric utility device (14), especially at least an electric machine for propelling the vehicle, wherein the vehicle battery and the electric utility device (14) are electrically coupled by an electronic circuitry arrangement (10), **characterized in that**
the electronic circuitry arrangement (10) is configured according to one of the preceding claims.

11. A method of electrically coupling an electric power supply device (12) with an electric utility device (14) by an electronic circuitry arrangement (10) in order to provide a power supply function for the electric utility device (14), wherein an electric main capacity (20) is switchably connected with the electric power supply device (12) by a first electrical switch (22), and wherein the electric main capacity (20) is also switchably connected with the electric utility device (14) by a second electrical switch (24), wherein the first and the second electrical switches (22, 24) are controlled to switch in a respective closed status and in a respective open status in an alternate manner,
**characterized in that**
a first electrical voltage is sensed at a first electric connection (16) of the electronic circuitry arrangement (10) being configured to couple electrically the electric power supply device (12), the sensed first electrical voltage is compared with a predefined over voltage condition, and at least one of the first and second electrical switches (22, 24) is operated as a voltage protector dependent on the comparison.

12. The method according to claim 11, wherein only the first electrical switch (22) or the second electrical switch (24) is operated as a voltage protector dependent on the comparison.

13. The method according to claim 11 or 12, wherein at least one of the first and second electrical switches (22, 24) comprises a transistor (32, 34), wherein the transistor (32, 34) is operated in a continuous mode if the sensed first electrical voltage is higher than the predefined over voltage condition.

14. The method according to claim 13, wherein the transistor (22, 24) is operated in a combined operation mode.

15. The method according to one of the preceding claims 11 through 14, wherein the first and the second electrical switches (22, 24) are controlled to switch such that an inrush current at the first electric connection (16) is limited to a predefined current value at least if the sensed first electrical voltage is smaller than the predefined over voltage condition.
